(19) Europäisches Patentamt
European Patent Office
Office européen des brevets

(11) **EP 4 683 210 A1**

(12) **EUROPEAN PATENT APPLICATION**
published in accordance with Art. 153(4) EPC

(43) Date of publication:
**21.01.2026 Bulletin 2026/04**

(51) International Patent Classification (IPC):
*H02P 23/14* $^{(2006.01)}$

(21) Application number: **23928497.9**

(52) Cooperative Patent Classification (CPC):
**H02P 23/14**

(22) Date of filing: **17.03.2023**

(86) International application number:
**PCT/JP2023/010534**

(87) International publication number:
**WO 2024/194912 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **FURUKAWA, Akira**
  **Tokyo 100-8310 (JP)**
• **KONDO, Shota**
  **Tokyo 100-8310 (JP)**

(74) Representative: **Hoffmann Eitle**
**Patent- und Rechtsanwälte PartmbB**
**Arabellastraße 30**
**81925 München (DE)**

(54) **CONTROL DEVICE FOR ROTARY MACHINE**

(57) This control device for a rotary machine includes a current command generation unit, a field winding voltage command unit, and a stator winding voltage command unit. The current command generation unit (81) includes: a current command calculation unit (810) which calculates a field winding current command and a stator winding current command from operation commands and DC voltage; an allowable magnetic flux calculation unit (811) which calculates an allowable magnetic flux interlinking stator windings from a rotational speed, DC voltage, the stator winding current command, and the field winding current; a first flux weakening current calculation unit (812) which calculates first flux weakening current from the field winding current, the stator winding current command, and the allowable magnetic flux; and a final current command calculation unit (813) which calculates a final stator winding current command from the stator winding current command and the first flux weakening current.

FIG. 6

EP 4 683 210 A1

**Description**

TECHNICAL FIELD

The present disclosure relates to a control device for a rotary machine.

BACKGROUND ART

A control device for a rotary machine having a field winding and a stator winding generates current commands for currents flowing through the field winding and the stator winding, in accordance with operation commands for torque, a rotational speed, and the like of the rotary machine, which are inputted from the outside. The control device for the rotary machine performs control so that currents flowing through the field winding and the stator winding follow the current commands. In general, the impedance of the field winding is greater than the impedance of the stator winding, and thus it is known that response of the current flowing through the field winding is slower than response of the current flowing through the stator winding. Therefore, in order to appropriately control the rotary machine, the conventional control device for the rotary machine performs control while taking into consideration the fact that current response of the field winding is slower than current response of the stator winding.

In one conventional control method for a rotary machine, a current command for a stator winding is calculated on the basis of variation in torque caused by variation in delay of current response of a field winding (see, for example, Patent Document 1). In another control method, response delay of current of a field winding with respect to a current command is simulated, and a current command for a stator winding is calculated on the basis of the simulated response delay (see, for example, Patent Document 2).

CITATION LIST

PATENT DOCUMENT

Patent Document 1: Japanese Laid-Open Patent Publication No. 2022-83905
Patent Document 2: WO2020/217438

SUMMARY OF THE INVENTION

PROBLEM TO BE SOLVED BY THE INVENTION

However, in such conventional control methods for a rotary machine, in a case where delay of current response of the field winding is slower than assumed, or in a case where current actually flowing through a stator winding cannot follow a current command for the stator winding because of variation in specifications, the amplitude of the current command for the stator winding might become greater than assumed. In this case, if the amplitude of the current command for the stator winding exceeds an upper limit value of voltage that the control device can output, a voltage command might be saturated. If the voltage command is saturated, windup of integral control in the control device, magnetic flux interference between the stator winding and the field winding in the rotary machine, and the like are caused. As a result, current control for the rotary machine becomes unstable.

The present disclosure has been made to solve the above problem, and an object of the present disclosure is to provide a control device for a rotary machine that can perform stable current control while suppressing saturation of a voltage command for a stator winding, even in a case where the amplitude of a current command for the stator winding might become greater than assumed.

MEANS TO SOLVE THE PROBLEM

A control device for a rotary machine according to the present disclosure is a control device for a rotary machine including a rotor having a field winding and a stator having a stator winding, the control device including: a current command generation unit which generates a field winding current command for field winding current and a stator winding current command for stator winding current, on the basis of an operation command inputted from outside; a field winding voltage command unit which generates a field winding voltage command for voltage to be applied to the field winding, on the basis of the field winding current command; a stator winding voltage command unit which generates a stator winding voltage command for voltage to be applied to the stator winding, on the basis of the stator winding current command; a field winding power conversion unit which applies voltage to the field winding on the basis of the field winding voltage command; and a stator winding power conversion unit which applies voltage to the stator winding on the basis of the stator winding voltage command. The current command generation unit includes: a current command calculation unit which calculates the field winding current command and the stator winding current command on the basis of the operation command and DC voltage inputted from outside; an allowable magnetic flux calculation unit which calculates an allowable magnetic flux which is an allowable value of a magnetic flux interlinking the stator winding, on the basis of a rotational speed of the rotary machine, the DC voltage, the stator winding current command, and the field winding current; a first flux weakening current calculation unit which calculates first flux weakening current on the basis of the field winding current, the stator winding current command, and the allowable magnetic flux; and a final current command calculation unit which calculates the stator winding current command that is final, on the basis of the stator winding current command and the first flux weakening current.

EFFECT OF THE INVENTION

In the control device for the rotary machine according to the present disclosure, the current command generation unit includes: the current command calculation unit which calculates the field winding current command and the stator winding current command on the basis of the operation command and DC voltage inputted from outside; the allowable magnetic flux calculation unit which calculates the allowable magnetic flux which is an allowable value of a magnetic flux interlinking the stator winding, on the basis of the rotational speed of the rotary machine, the DC voltage, the stator winding current command, and the field winding current; the first flux weakening current calculation unit which calculates first flux weakening current on the basis of the field winding current, the stator winding current command, and the allowable magnetic flux; and the final current command calculation unit which calculates the stator winding current command that is final, on the basis of the stator winding current command and the first flux weakening current. Thus, it is possible to perform stable current control while suppressing saturation of the voltage command for the stator winding.

BRIEF DESCRIPTION OF THE DRAWINGS

[FIG. 1] FIG. 1 is a configuration diagram of a control device for a rotary machine according to embodiment 1.
[FIG. 2] FIG. 2 is a configuration diagram of a stator winding power conversion unit according to embodiment 1.
[FIG. 3] FIG. 3 is a configuration diagram of a field winding power conversion unit according to embodiment 1.
[FIG. 4] FIG. 4 is a configuration diagram of a field winding power conversion unit according to embodiment 1.
[FIG. 5] FIG. 5 is a configuration diagram showing a function of a processor according to embodiment 1.
[FIG. 6] FIG. 6 is a configuration diagram showing a function of a current command generation unit according to embodiment 1.
[FIG. 7] FIG. 7 shows a relationship of a q-axis magnetic flux with respect to d-axis current and q-axis current at specific field winding current in the rotary machine according to embodiment 1.
[FIG. 8] FIG. 8 shows a relationship of d-axis current with respect to a d-axis magnetic flux and q-axis current at specific field winding current in the rotary machine according to embodiment 1.
[FIG. 9] FIG. 9 is a configuration diagram showing the function of a current command generation unit according to embodiment 2.

DESCRIPTION OF EMBODIMENTS

Hereinafter, a control device for a rotary machine according to embodiments for carrying out the present disclosure will be described in detail with reference to the drawings. In the drawings, the same reference characters denote the same or corresponding parts.

Embodiment 1

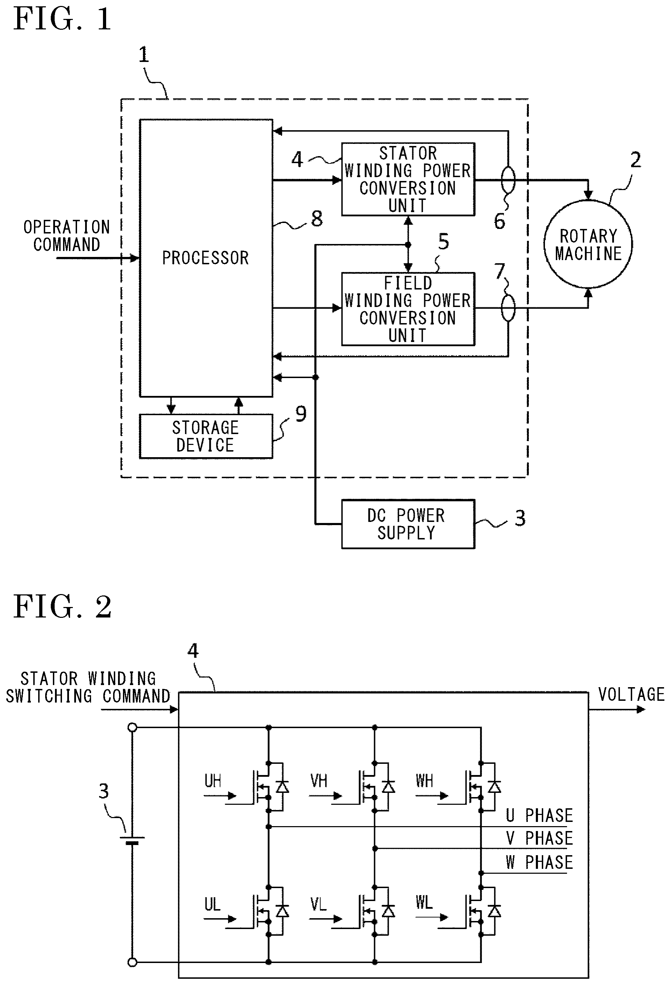

FIG. 1 is a configuration diagram of a control device for a rotary machine according to embodiment 1. A control device 1 for a rotary machine according to the present embodiment controls a rotary machine 2. The control device 1 is driven by DC voltage of an external DC power supply 3. The control device 1 includes a stator winding power conversion unit 4, a field winding power conversion unit 5, a stator winding current detection unit 6 which detects current flowing through a stator winding, a field winding current detection unit 7 which detects current flowing through a field winding, a processor 8, and a storage device 9. The control device 1 for the rotary machine according to the present embodiment controls the rotary machine 2 on the basis of operation commands inputted from a host device. The operation commands inputted from the host device are, for example, a torque command for determining torque of the rotary machine 2, a rotational speed command for determining a rotational speed thereof, and the like.

The rotary machine 2 includes a rotor having a permanent magnet and the field winding, and a stator having one set of stator windings for three phases, i.e., U phase, V phase, and W phase. The rotor may not necessarily have a permanent magnet. The stator windings are not limited to a configuration of having one set of three phases, and a configuration of having one or more sets of three or more phases may be adopted.

The stator winding power conversion unit 4 converts DC voltage of the DC power supply 3 to AC voltage, and applies AC voltage to the stator windings. The field winding power conversion unit 5 converts DC voltage of the DC power supply 3 to DC voltage having a different amplitude, and applies the DC voltage as field winding voltage $V_f$ to the field winding. The stator winding current detection unit 6 detects currents flowing through the stator windings for U phase, V phase, and W phase of the rotary machine 2. The field winding current detection unit 7 detects current flowing through the field winding of the rotary machine 2.

FIG. 2 is a configuration diagram of the stator winding power conversion unit according to the present embodiment. FIG. 2 shows an example of the stator winding power conversion unit 4 in the present embodiment. As shown in FIG. 2, the stator winding power conversion unit 4 in the present embodiment is a three-phase full-bridge inverter composed of six switching elements and six diodes. The configuration of the stator winding power conversion unit 4 is a configuration for a case where the rotary machine has one set of stator windings for three phases, i.e., U phase, V phase, and W phase. Each switching element is formed of a MOS-FET (metal oxide semiconductor-field effect transistor), an IGBT (insulated gate bipolar transistor), or the like. The stator winding power conversion unit 4 applies AC voltages to the stator windings for U phase, V phase, and W phase of the rotary machine 2 in accordance with a stator winding switching command inputted from the processor 8. Specifically, the stator winding power conversion unit 4 applies AC voltages according to switching commands UH and UL for U phase, switching commands VH and VL for V phase, and switching commands WH and WL for W phase from the processor 8, to the stator windings for U phase, V phase, and W phase of the rotary machine 2. The stator winding power conversion unit 4 is not limited to an inverter, and may be a converter. The configuration of the inverter of the stator winding power conversion unit 4 may be any configuration having one or more sets of three or more phases in accordance with the number of phases of the stator windings of the rotary machine 2.

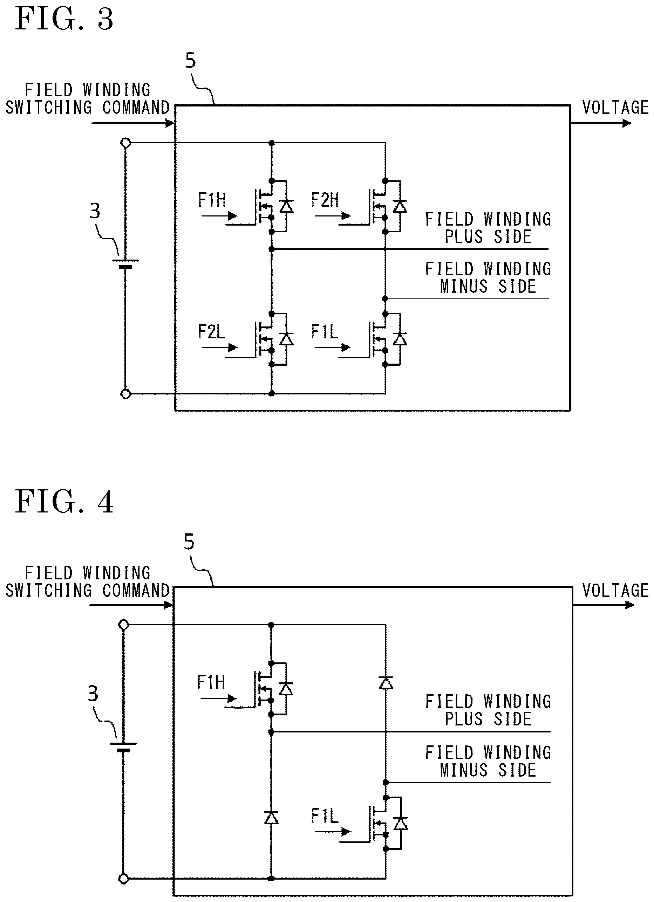

FIG. 3 is a configuration diagram of the field winding power conversion unit according to the present embodiment. FIG. 3 shows an example of the field winding power conversion unit 5 in the present embodiment. As shown in FIG. 3, the field winding power conversion unit 5 in the present embodiment is a two-phase full-bridge converter composed of four switching elements and four diodes. Each switching element is formed of a MOS-FET, an IGBT, or the like. The field winding power conversion unit 5 applies DC voltage to the field winding of the rotary machine 2 in accordance with a field winding switching command inputted from the processor 8. Specifically, the field winding power conversion unit 5 converts DC voltage inputted from the DC power supply 3 to DC voltage having a different amplitude in accordance with switching commands F1H, F1L, F2H, F2L for the field winding from the processor 8, and applies the converted DC voltage to the field winding of the rotary machine 2. For example, in a case where a torque command inputted to the processor 8 is a command for increasing an amplitude, the field winding power conversion unit 5 controls application voltage so that current of the field winding increases in the positive direction. Conversely, in a case where a torque command inputted to the processor 8 is a command for decreasing an amplitude, the field winding power conversion unit 5 controls application voltage so that current of the field winding increases in the negative direction.

FIG. 4 is a configuration diagram of the field winding power conversion unit according to the present embodiment. FIG. 4 shows another example of the field winding power conversion unit 5 in the present embodiment. As shown in FIG. 4, the field winding power conversion unit 5 is configured such that, in the field winding power conversion unit shown in FIG. 3, the switching elements for applying voltage in the negative direction to the field winding are replaced with diodes. Therefore, this field winding power conversion unit 5 is reduced in cost as compared to the field winding power conversion unit shown in FIG. 3. However, this field winding power conversion unit 5 cannot apply voltage in the negative direction to the field winding. Therefore, in a case where a torque command is to decrease an amplitude, current response of the field winding greatly depends on a time constant of a resistance and an inductance of the field winding, and thus the current response of the field winding is extremely slow as compared to current response of the stator winding.

The stator winding current detection unit 6 and the field winding current detection unit 7 are, for example, current sensors of a resistance detection type, a magnetic field detection type, or the like. The stator winding current detection unit 6 detects stator winding currents $I_U$, $I_V$, $I_W$ flowing through the stator windings for U phase, V phase, and W phase of the rotary machine 2. The field winding current detection unit 7 detects field winding current $I_f$ flowing through the field winding of the rotary machine 2.

The processor 8 is, for example, a CPU (Central Processing Unit), and executes a program read from the storage device 9, to implement various functions. The program to be executed by the processor 8 is stored in the storage device 9. The storage device 9 includes a volatile storage device such as a random access memory and an auxiliary storage device such as a flash memory. When the processor 8 reads the program from the storage device 9, the processor 8 reads the program stored in the auxiliary storage device via the volatile storage device. The processor 8 may output data such as a calculation result to the volatile storage device of the storage device 9, or may store such data into the auxiliary storage device via the volatile storage device.

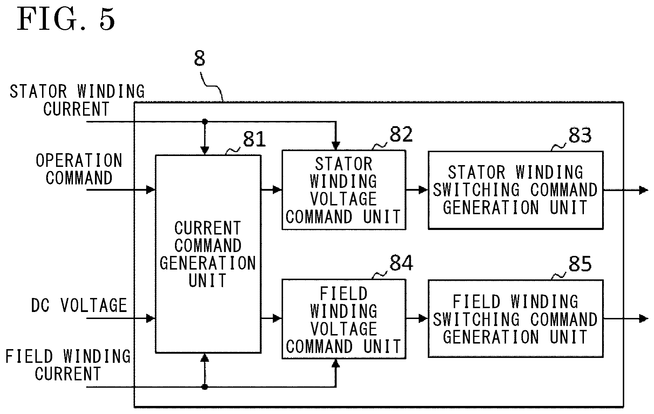

FIG. 5 is a configuration diagram showing a function of the processor. As shown in FIG. 5, the processor 8 includes a current command generation unit 81, a stator winding voltage command unit 82, a stator winding switching command generation unit 83, a field winding voltage command unit 84, and a field winding switching command generation unit 85.

The current command generation unit 81 receives operation commands such as a torque command and a rotational speed command, DC voltage of the DC power supply 3, the stator winding currents $I_U$, $I_V$, $I_W$ detected by the stator winding current detection unit 6, and the field winding current $I_f$ detected by the field winding current detection unit 7. The current command generation unit 81 generates final stator winding current commands $I_{dtgt}$, $I_{qtgt}$ and a field winding current command $I_{fref}$ on the basis of the above inputs. Here, a d axis is an axis representing the direction of a magnetic flux interlinking the stator by the permanent magnet and the field winding of the rotor, and a q axis is an axis orthogonal to the d axis. Hereinafter, indices d and q attached to notations of current and voltage mean the d axis and the q axis, respectively.

On the basis of the final stator winding current commands $I_{dtgt}$, $I_{qtgt}$ generated by the current command generation unit 81 and the stator winding currents $I_U$, $I_V$, $I_W$ detected by the stator winding current detection unit 6, the stator winding voltage command unit 82 generates stator winding voltage commands so that stator winding currents follow the final stator winding current commands. At this time, the stator winding voltage command unit 82 performs coordinate conversion of the stator winding currents $I_U$, $I_V$, $I_W$ to $I_d$, $I_q$ on the basis of rotor position information of the rotary machine 2, and then calculates final voltage commands $V_{dtgt}$, $V_{qtgt}$ using decoupling control and PI (Proportional-Integral) control so that $I_d$ and $I_q$ follow $I_{dtgt}$ and $I_{qtgt}$. Further, the stator winding voltage command unit 82 converts $V_{dtgt}$ and $V_{qtgt}$ through coordinate conversion to stator winding voltage commands $V_U$, $V_V$, $V_W$. The rotor position information of the rotary machine 2 can be detected by means such as a resolver or an encoder attached to the rotary machine 2, although not shown. Alternatively, rotor position information estimated by a rotor position estimator may be used as the rotor position information of the rotary machine 2. The rotational speed of the rotary machine 2 can be obtained from temporal change in rotor position information.

The stator winding switching command generation unit 83 performs pulse width modulation on the stator winding voltage commands $V_U$, $V_V$, $V_W$ calculated by the stator winding voltage command unit 82, to generate the switching commands UH and UL for U phase, the switching commands VH and VL for V phase, and the switching commands WH and WL for W phase, which have pulse widths according to the stator winding voltage commands. The stator winding switching command generation unit 83 outputs the generated switching commands to the stator winding power conversion unit 4.

On the basis of the field winding current command $I_{fref}$ generated by the current command generation unit 81 and the field winding current $I_f$ detected by the field winding current detection unit 7, the field winding voltage command unit 84 generates a field winding voltage command so that the field winding current follows the field winding current command. At this time, the field winding voltage command unit 84 calculates the field winding voltage command $V_{fref}$ using PI control so that the field winding current $I_f$ follows the field winding current command $I_{fref}$.

The field winding switching command generation unit 85 performs pulse width modulation on the field winding voltage command $V_{fref}$ calculated by the field winding voltage command unit 84, to generate a switching command having a pulse width according to the field winding voltage command. In a case where the field winding power conversion unit 5 has the configuration shown in FIG. 3, the field winding switching command generation unit 85 generates the switching commands F1H, F1L and F2H, F2L. In a case where the field winding power conversion unit 5 has the configuration shown in FIG. 4, the field winding switching command generation unit 85 generates the switching commands F1H, F1L. Then, the field winding switching command generation unit 85 outputs the generated switching commands to the field winding power conversion unit 5.

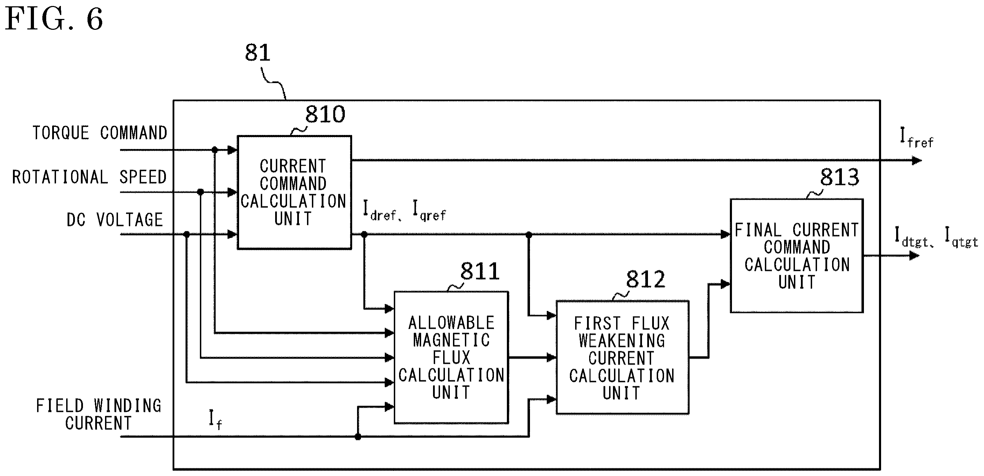

FIG. 6 is a configuration diagram showing the function of the current command generation unit. As shown in FIG. 6, the current command generation unit 81 includes a current command calculation unit 810, an allowable magnetic flux calculation unit 811, a first flux weakening current calculation unit 812, and a final current command calculation unit 813.

The current command calculation unit 810 receives a torque command, a rotational speed, and DC voltage. The current command calculation unit 810 has a lookup table having combinations of a torque command, a rotational speed, DC voltage, and the stator winding current commands $I_{dref}$, $I_{qref}$ and the field winding current command $I_{fref}$ that maximize efficiency. On the basis of the lookup table, the current command calculation unit 810 calculates the stator winding current commands $I_{dref}$, $I_{qref}$ and the field winding current command $I_{fref}$ that maximize efficiency. The current command calculation unit 810 may not necessarily use a lookup table to generate the stator winding current commands and the field winding current command. The current command calculation unit 810 may calculate the stator winding current commands and the field winding current command on the basis of a relational equation among a torque command, a rotational speed, DC voltage, the stator winding current commands, and the field winding current command. In a case where a rotational speed command is provided as an operation command, the rotational speed command may be used instead of the rotational speed.

The allowable magnetic flux calculation unit 811 receives the stator winding current commands $I_{dref}$, $I_{qref}$, the torque command, the rotational speed, and the field winding current $I_f$. The allowable magnetic flux calculation unit 811 calculates a d-axis component $\varphi_{dlim}$ of an allowable magnetic flux on the basis of the stator winding current command, the torque command, the rotational speed, and the field winding current $I_f$, using Formulae (1) to (16) described below.

Voltage equations in a steady state are represented by the following Formula (1), using d-axis voltage $V_d$, q-axis voltage $V_q$, d-axis current $I_d$, q-axis current $I_q$, a d-axis magnetic flux $\varphi_d$, a q-axis magnetic flux $\varphi_q$, and an electrical angular velocity $\omega$.

[Mathematical 1]

$$\begin{cases} V_d = R_a I_d - \omega \varphi_q \\ V_q = R_a I_q + \omega \varphi_d \end{cases} \cdots (1)$$

The d-axis magnetic flux $\varphi_d$ and the q-axis magnetic flux $\varphi_q$ can be represented by functions of the d-axis current $I_d$, the q-axis current $I_q$, and the field winding current $I_f$, as shown by the following Formula (2).

[Mathematical 2]

$$\begin{cases} \varphi_d = f_d(I_d, I_q, I_f) \\ \varphi_q = f_q(I_d, I_q, I_f) \end{cases} \cdots (2)$$

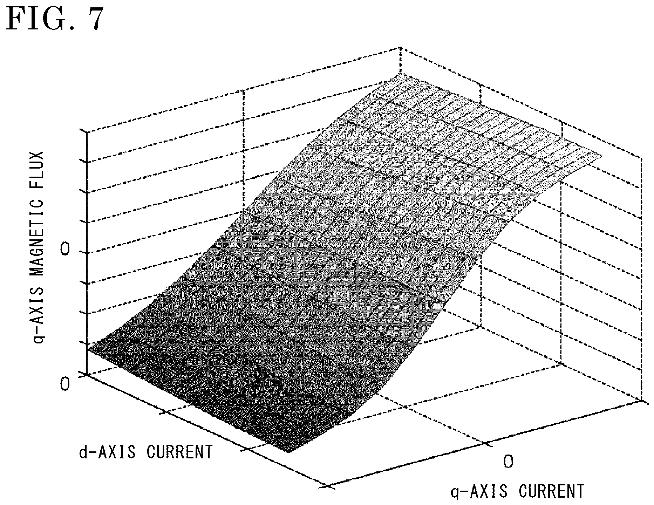

FIG. 7 shows a relationship of the q-axis magnetic flux with respect to d-axis current and q-axis current at specific field winding current. FIG. 7 shows a relationship represented by the lower equation in Formula (2) at specific field winding current. As shown in FIG. 7, change in the q-axis magnetic flux with respect to d-axis current is small, whereas change in the q-axis magnetic flux with respect to q-axis current is great. Although a graph corresponding to the upper equation in Formula (2) is not shown, change in the d-axis magnetic flux with respect to q-axis current is small, whereas change in the d-axis magnetic flux with respect to d-axis current is great.

There is a limit on voltage that can be applied to the stator winding based on the DC voltage $V_{dc}$ outputted from the DC power supply 3. Therefore, d-axis voltage and q-axis voltage are limited by limit voltage $V_{max}$, and the sum of squares of d-axis voltage and q-axis voltage needs to satisfy the following Formula (3). That is, by reducing the absolute value of the second term on the right-hand side of Formula (1), it is possible to suppress voltage saturation.

[Mathematical 3]

$$V_d{}^2 + V_q{}^2 \leq V_{max}{}^2 \cdots (3)$$

The limit voltage $V_{max}$ is represented by the following Formula (4) using a voltage utilization factor K. The voltage utilization factor K is 0.707 when operation is performed at the maximum amplitude that allows line voltage to keep a sinewave, and 0.78 when operation is performed with a rectangular wave applied.

[Mathematical 4]

$$V_{max} = K V_{dc} \cdots (4)$$

By substituting Formula (1) into Formula (3), the following Formula (5) is obtained.
[Mathematical 5]

$$\omega^2\left(\varphi_d{}^2 + \varphi_q{}^2\right) \le V_{max}{}^2 - R_a{}^2\left(I_d{}^2 + I_q{}^2\right) - R_a\omega\left(-I_d\varphi_q + I_q\varphi_d\right)\cdots(5)$$

In a region in which there is concern about voltage saturation, the following Formula (6) is often satisfied.
[Mathematical 6]

$$\omega^2\left(\varphi_d{}^2 + \varphi_q{}^2\right) \gg R_a{}^2\left(I_d{}^2 + I_q{}^2\right), R_a\omega\left(-I_d\varphi_q + I_q\varphi_d\right)\cdots(6)$$

From Formula (5), upper limits of the d-axis magnetic flux and the q-axis magnetic flux are determined by limit voltage. Therefore, as the rotational speed increases, it is necessary to suppress the absolute value of the d-axis magnetic flux or the absolute value of the q-axis magnetic flux. The absolute value of the d-axis magnetic flux can be reduced by setting the d-axis current in the negative direction, and the absolute value of the q-axis magnetic flux can be reduced by making the absolute value of the q-axis current small.

Since the d-axis magnetic flux $\varphi_d$ and the q-axis magnetic flux $\varphi_q$ change with d-axis current and q-axis current, the third term in Formula (5) is not originally determined in a state in which d-axis current and q-axis current are indefinite. However, since the relation of Formula (6) is satisfied, a d-axis magnetic flux temporary value $\varphi_{d\_tmp}$ and a q-axis magnetic flux temporary value $\varphi_{q\_tmp}$ which can be calculated by the following Formula (7) from the d-axis current command and the q-axis current command may be used for the right-hand side of Formula (5).

By rearranging Formula (5) using the d-axis magnetic flux temporary value $\varphi_{d\_tmp}$ and the q-axis magnetic flux temporary value $\varphi_{q\_tmp}$ shown in Formula (7), upper limits of the d-axis magnetic flux and the q-axis magnetic flux are represented by the following Formula (8). By using field winding current that satisfies Formula (8), accuracy of the d-axis magnetic flux temporary value and the q-axis magnetic flux temporary value can be improved. The allowable magnetic flux calculation unit 811 may have, as a map or a function, $f_d$ and $f_q$ representing the relationship between the stator winding current commands $I_{dref}$, $I_{qref}$ and the field winding current $I_f$, and the d-axis magnetic flux temporary value $\varphi_{d\_tmp}$ and the q-axis magnetic flux temporary value $\varphi_{q\_tmp}$, shown in Formula (7).
[Mathematical 7]

$$\begin{cases} \varphi_{d\_tmp} = f_d\left(I_{dref}, I_{qref}, I_f\right) \\ \varphi_{q\_tmp} = f_q\left(I_{dref}, I_{qref}, I_f\right) \end{cases} \cdots(7)$$

[Mathematical 8]

$$\omega^2\left(\varphi_d{}^2 + \varphi_q{}^2\right) \le V_{max}{}^2 - R_a{}^2\left(I_{dref}{}^2 + I_{qref}{}^2\right) - R_a\omega\left(-I_{dref}\varphi_{q\_tmp} + I_{qref}\varphi_{d\_tmp}\right)\cdots(8)$$

In a case of suppressing voltage saturation through control for d-axis current, the d-axis magnetic flux is limited so as to be weakened. Since the q-axis magnetic flux changes less in the d-axis direction, the d-axis magnetic flux is caused to satisfy the following Formula (9).
[Mathematical 9]

$$|\varphi_d| \le \frac{1}{|\omega|}\sqrt{V_{max}{}^2 - R_a{}^2\left(I_{dref}{}^2 + I_{qref}{}^2\right) - R_a\omega\left(-I_{dref}\varphi_{q\_tmp} + I_{qref}\varphi_{d\_tmp}\right) - \omega^2\varphi_{q\_tmp}{}^2}\cdots(9)$$

That is, if the d-axis magnetic flux satisfies Formula (9), voltage saturation can be suppressed. Therefore, where an allowable amount of a magnetic flux with respect to voltage saturation is defined as an allowable magnetic flux, the d-axis component $\varphi_{dlim}$ of the allowable magnetic flux can be calculated by the following Formula (10).
[Mathematical 10]

$$\varphi_{dlim} = \frac{1}{|\omega|} \sqrt{V_{max}^2 - R_a^2(I_{dref}^2 + I_{qref}^2) - R_a\omega(-I_{dref}\varphi_{q\_tmp} + I_{qref}\varphi_{d\_tmp}) - \omega^2\varphi_{q\_tmp}^2} \cdots (10)$$

Here, if d-axis current is excessively reduced in the negative direction, the d-axis magnetic flux becomes negative. Therefore, in order to suppress voltage saturation, the d-axis current needs to be set in a range shown by the following Formula (11), using a d-axis current lower limit value $I_{dmin}$. The d-axis current lower limit value $T_{dmin}$ tends to monotonously increase with respect to the field winding current.
[Mathematical 11]

$$I_{dmin} \leq I_d \cdots (11)$$

The d-axis current lower limit value $I_{dmin}$ is set to d-axis current at which the d-axis magnetic flux becomes 0. Alternatively, the d-axis current lower limit value $I_{dmin}$ may be set to -1 times a current upper limit value $I_{dqmax}$ that can be applied to the stator winding power conversion unit and the rotary machine. Here, the current upper limit value $I_{dqmax}$ is an upper limit value of the root sum square of d-axis current and q-axis current, which is determined on the basis of the rotary machine 2 and the stator winding power conversion unit 4.

Accordingly, the d-axis component $\varphi_{dlim}$ of the allowable magnetic flux can be calculated by the following Formula (13) using a second q-axis magnetic flux temporary value $\varphi_{q\_tmp2}$ shown in the following Formula (12) considering Formula (11). The allowable magnetic flux calculation unit 811 may have, as a map or a function, $f_q$ representing the relationship between the second q-axis magnetic flux temporary value $\varphi_{q\_tmp2}$, and the d-axis current lower limit value $I_{dmin}$, the stator winding current command $I_{qref}$ for the q axis, and the field winding current $I_f$, shown in Formula (12).
[Mathematical 12]

$$\varphi_{q\_tmp2} = f_q(I_{dmin}, I_{qref}, I_f) \cdots (12)$$

[Mathematical 13]

$$\varphi_{dlim} = \frac{1}{|\omega|} \sqrt{V_{max}^2 - R_a^2(I_{dmin}^2 + I_{qref}^2) - R_a\omega(-I_{dref}\varphi_{q\_tmp} + I_{qref}\varphi_{d\_tmp}) - \omega^2\varphi_{q\_tmp2}^2} \cdots (13)$$

Output torque T of the rotary machine is represented by the following Formula (14), using $P_m$ which is the number of poles of the rotary machine.
[Mathematical 14]

$$T = P_m(-I_d\varphi_q + I_q\varphi_d) \cdots (14)$$

In a case where a torque command $T_{ref}$ is provided as an operation command, the d-axis component $\varphi_{dlim}$ of the allowable magnetic flux can be calculated by the following Formula (15). By utilizing the provided torque command, calculation of the third term on the right-hand side can be simplified, so that the processing load can be reduced.
[Mathematical 15]

$$\varphi_{dlim} = \frac{1}{|\omega|} \sqrt{V_{max}^2 - R_a^2(I_{dref}^2 + I_{qref}^2) - \frac{R_a\omega T_{ref}}{P_m} - \omega^2\varphi_{q\_tmp}^2} \cdots (15)$$

The d-axis component $\varphi_{dlim}$ of the allowable magnetic flux can be calculated by the following Formula (16) having the d-axis current lower limit value $I_{dmin}$ in the second term on the right-hand side. By using the d-axis current lower limit value instead of the d-axis component of the stator winding current command, a calculation formula in which the present state is more reflected is obtained.
[Mathematical 16]

$$\varphi_{dlim} = \frac{1}{|\omega|}\sqrt{V_{max}^2 - R_a^2\left(I_{dmin}^2 + I_{qref}^2\right) - \frac{R_a\omega T_{ref}}{P_m} - \omega^2 \varphi_{q\_tmp2}^2} \cdots (16)$$

Thus far, the case of limiting the d-axis component of the allowable magnetic flux in the allowable magnetic flux calculation unit 811 in the weakening direction, has been described. Alternatively, in the allowable magnetic flux calculation unit 811, a q-axis component of the allowable magnetic flux may be limited in the weakening direction. For example, the allowable magnetic flux calculation unit 811 may calculate the q-axis component $\varphi_{qlim}$ of the allowable magnetic flux using the following Formula (17) or (18), or the like. Calculating the q-axis component $\varphi_{qlim}$ of the allowable magnetic flux in the allowable magnetic flux calculation unit 811 is effective in a case where voltage saturation cannot be suppressed even if d-axis current is reduced to a d-axis current lower limit value, particularly in a region where the rotational speed of the rotary machine is great.
[Mathematical 17]

$$\varphi_{qlim} = \frac{1}{|\omega|}\sqrt{V_{max}^2 - R_a^2\left(I_{dmin}^2 + I_{qref}^2\right) - R_a\omega\left(-I_{dref}\varphi_{q\_tmp} + I_{qref}\varphi_{d\_tmp}\right) - \omega^2 \varphi_{d\_tmp}^2} \cdots (17)$$

[Mathematical 18]

$$\varphi_{qlim} = \frac{1}{|\omega|}\sqrt{V_{max}^2 - R_a^2\left(I_{dmin}^2 + I_{qref}^2\right) - \frac{R_a\omega T_{ref}}{P_{in}} - \omega^2 \varphi_{d\_tmp}^2} \cdots (18)$$

The first flux weakening current calculation unit 812 receives the field winding current, the stator winding current command, and the allowable magnetic flux. The first flux weakening current calculation unit 812 calculates first flux weakening current on the basis of the field winding current, the stator winding current command, and the allowable magnetic flux, using Formulae (19) to (22) described below.

In a case where the d-axis component $\varphi_{dlim}$ of the allowable magnetic flux is obtained, the first flux weakening current calculation unit 812 calculates a d-axis component $T_{d\_fw}$ of the first flux weakening current by the following Formula (19). The first flux weakening current calculation unit 812 may perform lower limit clip processing on the d-axis component $I_{d\_fw}$, of the first flux weakening current by the d-axis current lower limit value $I_{dmin}$.
[Mathematical 19]

$$I_{d\_fw} = g_d\left(I_f, I_{qref}, \varphi_{dlim}\right) \cdots (19)$$

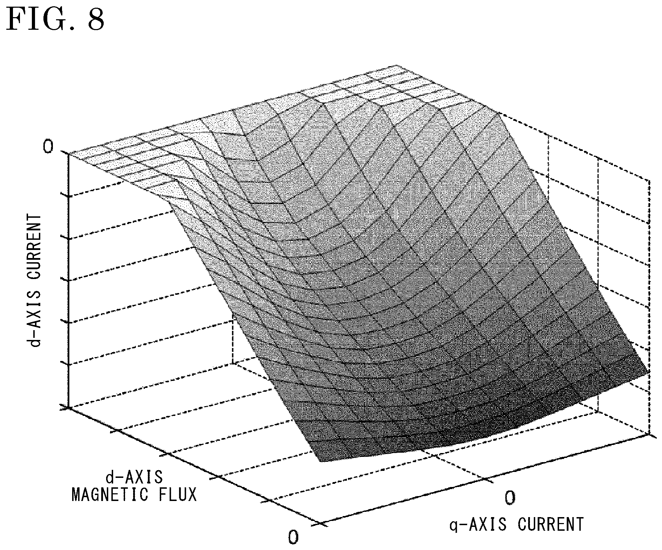

FIG. 8 shows a relationship of d-axis current with respect to q-axis current and a d-axis magnetic flux which is a d-axis component of the allowable magnetic flux at specific field winding current. FIG. 8 shows a relationship represented by Formula (19) at specific field winding current. The first flux weakening current calculation unit 812 may have, as a map or a function, $g_d$ representing the relationship between d-axis current, and the field winding current, the d-axis magnetic flux which is the d-axis component of the allowable magnetic flux, and q-axis current, shown in FIG. 8.

In a case where the q-axis component $\varphi_{qlim}$ of the allowable magnetic flux is obtained, the first flux weakening current calculation unit 812 calculates a q-axis component $I_{q\_fw}$ of the first flux weakening current by the following Formula (20). The first flux weakening current calculation unit 812 may have, as a map or a function, $g_q$ representing the relationship between d-axis current, and the field winding current, the q-axis magnetic flux which is the q-axis component of the allowable magnetic flux, and q-axis current. The first flux weakening current calculation unit 812 may perform upper limit clip processing on the q-axis component $I_{q\_fw}$ of the first flux weakening current by the current upper limit value $I_{dqmax}$.
[Mathematical 20]

$$I_{q\_fw} = g_q\left(I_f, I_{dmin}, \varphi_{qlim}\right) \cdots (20)$$

In a case where both of the d-axis component $\varphi_{dlim}$ and the q-axis component $\varphi_{qlim}$ of the allowable magnetic flux are obtained, the first flux weakening current calculation unit 812 calculates the d-axis component $I_{d\_fw}$ of the first flux weakening current by Formula (19) and calculates the q-axis component $I_{q\_fw}$ of the first flux weakening current by the following Formula (21). The first flux weakening current calculation unit 812 may have, as maps or functions, $g_d$ representing the relationship between d-axis current, and the field winding current, the d-axis component of the allowable magnetic flux, and q-axis current, and $g_q$ representing the relationship between q-axis current, and the field winding current, the q-axis component of the allowable magnetic flux, and d-axis current. The first flux weakening current calculation unit 812 may perform upper limit clip processing on the d-axis component $I_{d\_fw}$ and the q-axis component $I_{q\_fw}$ of the first flux weakening current by the current upper limit value $I_{dqmax}$.
[Mathematical 21]

$$I_{q\_fw} = g_q\left(I_f, I_{d\_fw}, \varphi_{qlim}\right) \cdots (21)$$

In a case where the d-axis component $\varphi_{dlim}$ of the allowable magnetic flux is not obtained, the first flux weakening current calculation unit 812 sets the d-axis component of the first flux weakening current to $I_{dref}$. In a case where the q-axis component $\varphi_{qlim}$ of the allowable magnetic flux is not obtained, the first flux weakening current calculation unit 812 calculates the q-axis component of the first flux weakening current by the following Formula (22).
[Mathematical 22]

$$I_{q\_fw} = \sqrt{I_{dqmax}{}^2 - I_{d\_fw}{}^2} \cdots (22)$$

The final current command calculation unit 813 receives the stator winding current command and the first flux weakening current. The final current command calculation unit 813 calculates a final stator winding current command on the basis of the stator winding current command and the first flux weakening current, using Formulae (23) to (25) described below.

In a case where voltage saturation needs to be suppressed, $I_{d\_fw}$ becomes smaller than the d-axis component $T_{dtgt}$ of the final stator winding current command. Therefore, the final current command calculation unit 813 calculates the d-axis component $I_{dtgt}$ of the final stator winding current command by the following Formula (23).
[Mathematical 23]

$$I_{dtgt} = min\left(I_{dref}, I_{d\_fw}\right) \cdots (23)$$

In a case where voltage saturation needs to be suppressed, the absolute value of $I_{q\_fw}$ becomes smaller than that of the q-axis component $I_{qtgt}$ of the final stator winding current command. Therefore, in a case where $I_{qref}$ is positive, the final current command calculation unit 813 calculates the q-axis component $I_{qtgt}$ of the final stator winding current command by the following Formula (24). In a case where $I_{qref}$ is negative, the final current command calculation unit 813 calculates the q-axis component $I_{qtgt}$ of the final stator winding current command by the following Formula (25).
[Mathematical 24]

$$I_{qtgt} = min\left(I_{qref}, I_{q\_fw}\right) \cdots (24)$$

[Mathematical 25]

$$I_{qtgt} = max\left(I_{qref}, -I_{q\_fw}\right) \cdots (25)$$

In the control device for the rotary machine configured as described above, on the basis of the final stator winding current commands $I_{qtgt}$ and $I_{qtgt}$, the stator winding voltage command unit generates the stator winding voltage commands so that the stator winding currents follow the final stator winding current commands. Thus, windup of integral control, unexpected magnetic flux interference between the stator winding and the field winding in the rotary machine, and the like can be suppressed. As a result, the control device for the rotary machine according to the present embodiment can perform stable current control while suppressing saturation of the voltage command for the stator winding. Here, windup of integral control means a phenomenon in which there is a great deviation between a target value and a present value in integral control and the deviation is added to an extent exceeding a saturation limit, so that it becomes difficult to respond immediately when the deviation is inverted.

Embodiment 2

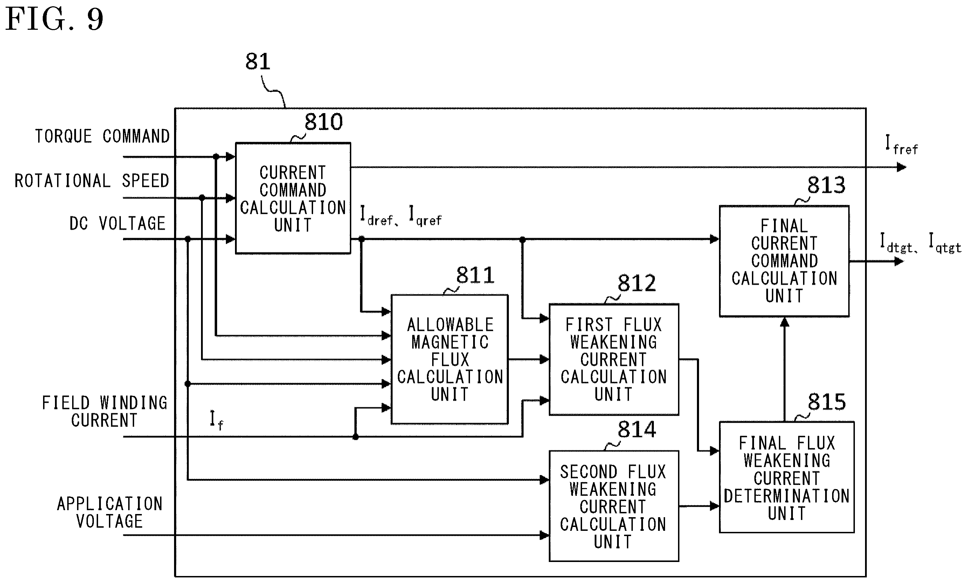

FIG. 9 is a configuration diagram showing the function of a current command generation unit of a control device for a rotary machine according to embodiment 2. The configuration of the control device for the rotary machine according to the present embodiment is the same as that shown in FIG. 1 in embodiment 1. The function configuration of the processor in the control device for the rotary machine according to the present embodiment is also the same as that shown in FIG. 5 in embodiment 1. In the control device for the rotary machine according to the present embodiment, the configuration of the current command generation unit inside the processor is different from that of the current command generation unit in embodiment 1.

As shown in FIG. 9, the current command generation unit 81 in the present embodiment additionally includes a second flux weakening current calculation unit 814 and a final flux weakening current determination unit 815 in the current command generation unit shown in FIG. 6 in embodiment 1.

The second flux weakening current calculation unit 814 receives DC voltage and application voltage. Here, the application voltage is application voltage to the stator winding, calculated from the stator winding voltage command outputted from the stator winding voltage command unit. In a case where the application voltage is greater than DC voltage, the second flux weakening current calculation unit 814 determines that voltage is saturated, and performs feedback of a deviation between the application voltage and the DC voltage, to calculate second flux weakening current. For example, the second flux weakening current calculation unit 814 has a high-frequency amplifier, a subtractor, and a compensator. The high-frequency amplifier calculates correction application voltage by amplifying a high-frequency component of the inputted application voltage. The subtractor subtracts the correction application voltage from target application voltage determined by a target voltage utilization factor and the DC voltage, to calculate a voltage deviation. The compensator calculates the second flux weakening current on the basis of the voltage deviation calculated by the subtractor.

The first flux weakening current calculation unit 812 is suitable for a case where flux weakening current is immediately needed when an operation command is sharply changed. However, when the specifications of the rotary machine and the control device vary from specifications assumed in advance, the flux weakening current might become excessive or deficient. In a steady state in which there is no sharp change in the rotational speed and currents flowing through the windings can almost follow the current commands, combining a method of performing feedback of the steady state enables selection of optimum flux weakening current. The second flux weakening current calculation unit 814 is provided for calculating the flux weakening current in the steady state.

The final flux weakening current determination unit 815 receives the first flux weakening current calculated by the first flux weakening current calculation unit 812, the second flux weakening current calculated by the second flux weakening current calculation unit 814, and the field winding current command and the field winding current which are not shown. The final flux weakening current determination unit 815 determines final flux weakening current by selecting one of the first flux weakening current inputted from the first flux weakening current calculation unit 812 and the second flux weakening current inputted from the second flux weakening current calculation unit 814, or determines the final flux weakening current by calculating a weighted average value of both currents. Then, the final flux weakening current determination unit 815 outputs the determined final flux weakening current to the final current command calculation unit 813.

In the stator winding current command and the field winding current command calculated by the current command calculation unit 810, normally, voltage saturation has been taken into consideration. However, in a case where the field winding current is significantly greater than the field winding current command, the d-axis magnetic flux $\varphi_d$ in Formula (1) becomes greater than assumed, so that it becomes difficult for the stator winding current to follow the stator winding current command due to voltage saturation. In such a case, in order to stabilize current control, it is necessary to ensure the final flux weakening current quickly so as to suppress voltage saturation. That is, in a case where the field winding current is significantly greater than the field winding current command, it is necessary to select the first flux weakening current calculated by the first flux weakening current calculation unit 812. Specifically, when the field winding current command is sharply decreased in the converter as shown in FIG. 4, the above state is likely to occur.

On the other hand, in a steady state in which there is no sharp change in the rotational speed and currents flowing through the windings can almost follow the current commands, fast response is not required, and therefore selecting the second flux weakening current calculated by the second flux weakening current calculation unit can optimize the stator winding current, whereby efficient operation can be achieved.

In the control device for the rotary machine according to the present embodiment, the current command generation unit 81 includes the second flux weakening current calculation unit 814 and the final flux weakening current determination unit 815. Therefore, in the control device for the rotary machine according to the present embodiment, in a case where the field winding current is significantly greater than the field winding current command, the first flux weakening current calculated by the first flux weakening current calculation unit can be selected, and otherwise, the second flux weakening current calculated by the second flux weakening current calculation unit can be selected. As a result, the control device for the rotary machine according to the present embodiment can perform optimum current control in which variation in the specifications of the rotary machine and the control device is taken into consideration, in a steady state, and can quickly eliminate voltage saturation even when the rotational speed sharply changes.

The final flux weakening current determination unit 815 calculates a deviation between the field winding current and the field winding current command, and sets, for the deviation, a first threshold and a second threshold greater than the first threshold. Then, when the deviation between the field winding current and the field winding current command is smaller than the first threshold, the final flux weakening current determination unit 815 determines the second flux weakening current calculated by the second flux weakening current calculation unit 814, as final flux weakening current. When the deviation between the field winding current and the field winding current command is greater than the second threshold, the final flux weakening current determination unit 815 determines the first flux weakening current calculated by the first flux weakening current calculation unit 812, as final flux weakening current. When the deviation between the field winding current and the field winding current command is not smaller than the first threshold and not greater than the second threshold, the final flux weakening current determination unit 815 determines the weighted average of the first flux weakening current inputted from the first flux weakening current calculation unit 812 and the second flux weakening current inputted from the second flux weakening current calculation unit 814, as final flux weakening current.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

1       control device
2       rotary machine
3       DC power supply
4       stator winding power conversion unit
5       field winding power conversion unit
6       stator winding current detection unit
7       field winding current detection unit
8       processor
9       storage device
81      current command generation unit
82      stator winding voltage command unit
83      stator winding switching command generation unit
84      field winding voltage command unit
85      field winding switching command generation unit
810     current command calculation unit
811     allowable magnetic flux calculation unit
812     first flux weakening current calculation unit
813     final current command calculation unit
814     second flux weakening current calculation unit
815     final flux weakening current determination unit

**Claims**

1. A control device for a rotary machine including a rotor having a field winding and a stator having a stator winding, the control device comprising:

a current command generation unit which generates a field winding current command for field winding current and a stator winding current command for stator winding current, on the basis of an operation command inputted from outside;
a field winding voltage command unit which generates a field winding voltage command for voltage to be applied to the field winding, on the basis of the field winding current command;
a stator winding voltage command unit which generates a stator winding voltage command for voltage to be applied to the stator winding, on the basis of the stator winding current command;
a field winding power conversion unit which applies voltage to the field winding on the basis of the field winding voltage command; and
a stator winding power conversion unit which applies voltage to the stator winding on the basis of the stator winding voltage command, wherein
the current command generation unit includes

a current command calculation unit which calculates the field winding current command and the stator winding current command on the basis of the operation command and DC voltage inputted from outside,
an allowable magnetic flux calculation unit which calculates an allowable magnetic flux which is an allowable value of a magnetic flux interlinking the stator winding, on the basis of a rotational speed of the rotary machine, the DC voltage, the stator winding current command, and the field winding current,

a first flux weakening current calculation unit which calculates first flux weakening current on the basis of the field winding current, the stator winding current command, and the allowable magnetic flux, and
a final current command calculation unit which calculates the stator winding current command that is final, on the basis of the stator winding current command and the first flux weakening current.

2. The control device for the rotary machine according to claim 1, wherein the allowable magnetic flux calculation unit calculates the allowable magnetic flux on the basis of a d-axis current lower limit value determined by the field winding current.

3. The control device for the rotary machine according to claim 1, wherein the allowable magnetic flux calculation unit calculates the allowable magnetic flux on the basis of a torque command included in the operation command.

4. The control device for the rotary machine according to claim 2 or 3, wherein the allowable magnetic flux calculated by the allowable magnetic flux calculation unit is a d-axis component.

5. The control device for the rotary machine according to any one of claims 1 to 4, wherein the first flux weakening current calculation unit calculates a d-axis component of the first flux weakening current on the basis of the field winding current, a q-axis component of the stator winding current command, and a d-axis component of the allowable magnetic flux.

6. The control device for the rotary machine according to any one of claims 1 to 4, wherein the first flux weakening current calculation unit calculates a q-axis component of the first flux weakening current on the basis of the field winding current, a d-axis current lower limit value, and a q-axis component of the allowable magnetic flux.

7. The control device for the rotary machine according to any one of claims 1 to 4, wherein the first flux weakening current calculation unit calculates a d-axis component of the first flux weakening current on the basis of the field winding current, a q-axis component of the stator winding current command, and a d-axis component of the allowable magnetic flux, and calculates a q-axis component of the first flux weakening current on the basis of the field winding current, the first flux weakening current, and a q-axis component of the allowable magnetic flux.

8. The control device for the rotary machine according to any one of claims 1 to 7, further comprising:

a second flux weakening current calculation unit which calculates second flux weakening current on the basis of application voltage to the stator winding; and

a final flux weakening current determination unit which determines one of the first flux weakening current and the second flux weakening current, as final flux weakening current, on the basis of a deviation between the field winding current and the field winding current command, or determines a weighted average of the first flux weakening current and the second flux weakening current, as final flux weakening current, on the basis of a deviation between the field winding current and the field winding current command, wherein

the final current command calculation unit calculates the stator winding current command that is final, on the basis of the final flux weakening current and the stator winding current command determined by the final flux weakening current determination unit.

9. The control device for the rotary machine according to claim 8, wherein

the final flux weakening current determination unit calculates the deviation between the field winding current and the field winding current command, and sets, for the deviation, a first threshold and a second threshold greater than the first threshold,

when the deviation is smaller than the first threshold, the final flux weakening current determination unit determines the second flux weakening current as the final flux weakening current,

when the deviation is greater than the second threshold, the final flux weakening current determination unit determines the first flux weakening current as the final flux weakening current, and

when the deviation is not smaller than the first threshold and not greater than the second threshold, the final flux weakening current determination unit determines the weighted average of the first flux weakening current and the second flux weakening current, as the final flux weakening current.

FIG. 1

FIG. 2

FIG. 3

FIG. 4

# FIG. 5

FIG. 6

FIG. 7

FIG. 8

# FIG. 9

EP 4 683 210 A1

## INTERNATIONAL SEARCH REPORT

| International application No. |
| --- |
| **PCT/JP2023/010534** |

**A. CLASSIFICATION OF SUBJECT MATTER**

*H02P 23/14*(2006.01)i
FI:  H02P23/14

According to International Patent Classification (IPC) or to both national classification and IPC

**B. FIELDS SEARCHED**

Minimum documentation searched (classification system followed by classification symbols)

H02P23/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/245815 A1 (MITSUBISHI ELECTRIC CORPORATION) 09 December 2021 (2021-12-09)<br>paragraphs [0001]-[0093], fig. 1-9 | 1-9 |
| A | JP 2022-83905 A (NISSAN MOTOR CO., LTD.) 06 June 2022 (2022-06-06)<br>paragraphs [0001]-[0123], fig. 1-15B | 1-9 |
| A | JP 2022-142257 A (MITSUBISHI ELECTRIC CORPORATION) 30 September 2022 (2022-09-30)<br>paragraphs [0001]-[0163], fig. 1-9 | 1-9 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/010534** |

| Patent document cited in search report | | | Publication date (day/month/year) | Patent family member(s) | Publication date (day/month/year) |
| --- | --- | --- | --- | --- | --- |
| WO | 2021/245815 | A1 | 09 December 2021 | (Family: none) | |
| JP | 2022-83905 | A | 06 June 2022 | (Family: none) | |
| JP | 2022-142257 | A | 30 September 2022 | (Family: none) | |

Form PCT/ISA/210 (patent family annex) (January 2015)

**EP 4 683 210 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022083905 A

- WO 2020217438 A